(19) **Europäisches Patentamt**
**European Patent Office**
**Office européen des brevets**

(11) **EP 4 422 905 B1**

(12) **EUROPÄISCHE PATENTSCHRIFT**

(45) Veröffentlichungstag und Bekanntmachung des Hinweises auf die Patenterteilung:
**16.07.2025 Patentblatt 2025/29**

(21) Anmeldenummer: **22808754.0**

(22) Anmeldetag: **21.10.2022**

(51) Internationale Patentklassifikation (IPC):
**B60K 35/10** (2024.01)  **B60K 35/22** (2024.01)
**B60K 35/232** (2024.01)  **B60K 35/28** (2024.01)

(52) Gemeinsame Patentklassifikation (CPC):
**B60K 35/28; B60K 35/10; B60K 35/22; B60K 35/232; G02B 27/0093; G02B 27/0172; G06F 3/011; G06F 3/012;** B60K 2360/167; B60K 2360/177

(86) Internationale Anmeldenummer:
**PCT/EP2022/079465**

(87) Internationale Veröffentlichungsnummer:
**WO 2023/072779 (04.05.2023 Gazette 2023/18)**

(54) **VERFAHREN UND VORRICHTUNG ZUM BESTIMMEN EINER EINBAUPOSE EINER FAHRZEUGFESTEN INERTIALSENSORIK IN EINEM KRAFTFAHRZEUG**

METHOD AND DEVICE FOR ASCERTAINING AN INSTALLATION POSE OF A VEHICLE-MOUNTED INERTIAL SENSOR SYSTEM IN A MOTOR VEHICLE

PROCÉDÉ ET DISPOSITIF POUR DÉTERMINER UNE POSE DE MONTAGE D'UN SYSTÈME DE CAPTEURS INERTIELS SOLIDAIRE D'UN VÉHICULE DANS UN VÉHICULE AUTOMOBILE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **29.10.2021 DE 102021128357**

(43) Veröffentlichungstag der Anmeldung:
**04.09.2024 Patentblatt 2024/36**

(73) Patentinhaber: **Bayerische Motoren Werke Aktiengesellschaft 80809 München (DE)**

(72) Erfinder:
• **PAULI, Manfred**
  **84079 Bruckberg (DE)**
• **HABERL, Wolfgang**
  **81547 München (DE)**
• **KEIM, Alan**
  **80997 München (DE)**
• **BAUERNFEIND, Tobias**
  **81371 München (DE)**

(56) Entgegenhaltungen:
DE-A1- 102018 201 509    DE-A1- 102019 103 360
DE-A1- 102019 116 089

**Beschreibung**

Technisches Gebiet

Die Erfindung betrifft Kraftfahrzeuge mit eingebauter oder fahrzeugfest angeordneter Inertialsensorik, insbesondere zur Unterstützung eines Trackings eines mobilen Geräts, wie beispielsweise einer Datenbrille. Die Erfindung betrifft weiterhin Maßnahmen zum Bestimmen der Einbaupose der fahrzeugfesten Inertialsensorik basierend auf einem Trackingsystem zum Erfassen einer Pose des mobilen Geräts und einer Inertialsensorik des mobilen Geräts.

Technischer Hintergrund

Es sind Datenbrillen, auch Head-mounted Displays genannt, bekannt, die mithilfe einer Anzeigevorrichtung eine Abbildung auf einer oder zwei Anzeigeflächen im Blickfeld des Trägers der Datenbrille anzeigen können. Die Anzeigeflächen können Reflexionsflächen entsprechen, die Abbildungen in das Auge des Trägers der Datenbrille richten. Die Sichtöffnungen der Datenbrille sind transparent, so dass durch die Datenbrille die reale Umgebung in gewöhnlicher Weise wahrgenommen werden kann. Die Anzeigeflächen liegen in den Sichtöffnungen, so dass eine anzuzeigende Information, wie beispielsweise Text, Symbole, Graphiken, Videoanzeigen und dergleichen, die Wahrnehmung der Umgebung überlagernd angezeigt werden kann.

Die Informationen können dem Träger der Datenbrille in der Regel kontaktanalog dargestellt werden, d.h. so dargestellt werden, dass diese als Objektinformation einem bestimmten zugeordneten Objekt in der Realumgebung überlagert ist bzw. an diesem orientiert ist oder dass die anzuzeigende Objektinformation in einer bestimmten Ausrichtung der Datenbrille bzw. deren Trägers angezeigt wird.

Weiterhin kann die kontaktanaloge Objektinformation so dargestellt werden, dass sie in Bezug auf das Objekt in der Realumgebung perspektivisch korrekt erscheint, d.h. die Illusion entsteht, dass das Objekt der Realumgebung tatsächlich um das zusätzliche Merkmal der visuellen Objektinformation ergänzt wurde.

Um die Objektinformation entsprechend kontaktanalog auf den Anzeigeflächen der Datenbrille anzuzeigen, ist es jedoch notwendig, die Position des Objektes in der Umgebung und die Blickrichtung des Benutzers zu kennen. Die Blickrichtung des Benutzers ist beim Tragen der Datenbrille fest deren Brillenpose zugeordnet, d.h. der 3D-Position als auch die 3D-Orientierung der Datenbrille.

Die Bestimmung der Pose der Datenbrille wird aus Gründen einer möglichst latenzarmen Erfassung und schneller Posenaktualisierung in der Datenbrille mithilfe einer internen Posenerkennungseinheit vorgesehen. Die Posenerkennungseinheit weist in der Regel eine Brillen-Inertialsensorik und eine Recheneinrichtung, z. B. in Form eines Mikroprozessors, auf. Mithilfe der Brillen-Inertialsensorik können Bewegungen in Form von Beschleunigungen erfasst und diese durch Integration in eine aktuelle Brillenpose der Datenbrille umgerechnet werden. Derartige in der Datenbrille integrierte Posenerkennungseinheiten weisen integrationsbedingt einen zunehmenden Posenerkennungsfehler auf, der mithilfe einer extern der Datenbrille vorgesehenen Posenerkennung eines Trackingsystems korrigiert werden kann. Diese externe Posenerkennung kann beispielsweise kamerabasiert sein, insbesondere mithilfe einer Innenraumkamera, die auf den Kopf des Trägers der Datenbrille gerichtet ist, um daraus eine Brillenpose der Datenbrille bezüglich eines Fahrzeugkoordinatensystems zu erkennen.

Die zur Korrektur der brilleninternen Erfassung der absoluten Pose der Datenbrille kann durch das brillenexterne aber fahrzeugfeste Trackingsystem bestimmt werden, bei der z.B. eine Innenraumkamera den Kopf des Trägers der Datenbrille erfasst und durch Auswertung der Kamerabilder entweder die Pose des Kopfes ermittelt und davon die Brillenpose der Datenbrille abgeleitet wird oder die Brillenpose der Datenbrille direkt erfasst und ermittelt wird. Bei diesen so genannten Outside-In-Trackingsystemen besteht eine Schwierigkeit darin, die außerhalb der Datenbrille ermittelte absolute Posenangabe insbesondere bei einer drahtlosen Kommunikationsverbindung mit einer ausreichend geringen Latenz an die Datenbrille zu übermitteln, so dass die Datenbrille entsprechend kontaktanaloge Darstellungen verzögerungsfrei bzw. mit einer nicht störenden Verzögerung ausgeben kann.

Ein weiteres Trackingverfahren kann ein verteiltes Tracking für Datenbrillen vorsehen. Hierzu wird eine Brillen-Inertialsensorik in der Datenbrille als auch eine Fahrzeug-Inertialsensorik fest eingebaut im Fahrzeug oder fahrzeugfest angeordnet benötigt. Fahrzeug-Inertialsensoriken können neben der Verbesserung des Tracking von Datenbrillen auch zur Verbesserung der Lokalisierungsgenauigkeit des Fahrzeugs notwendig sein.

Die genaue Kenntnis der Einbaulage/Einbaupose der Fahrzeug-Inertialsensorik bezogen auf das Fahrzeugkoordinatensystem ist sowohl für das verteilte Tracking einer Datenbrille als auch für die Unterstützung der Fahrzeuglokalisierung notwendig.

Üblicherweise wird die Einbaulage bzw. Position der Fahrzeug-Inertialsensorik entweder aus CAD-Daten abgeleitet oder durch manuelles Einmessen bestimmt. Für nicht fest verbaute Inertialsensoriken im Fahrzeug kann die ungefähre Ausrichtung und Pose durch eine konstruktive Gestaltung vorgegeben werden, wie beispielsweise ein Mobilgerät, das sich in einer vorgegebenen Vorrichtung befindet.

Die Druckschrift DE 10 2018 201 509 A1 offenbart ein Verfahren zum Betreiben eines Anzeigesystems mit einer Datenbrille in einem Kraftfahrzeug vorgesehen, mit folgenden Schritten: Erfassen einer Brillenbewegungsinformation mit einer Brillenbewegungsangabe und einem Zeitstempel, der einem Zeitpunkt des Erfassens der durch die Brillenbewegungsangabe angegebenen relativen Bewegung der Datenbrille bezüglich der Fahrzeugumgebung entspricht; durch die Datenbrille;

- Empfangen einer Brillenposeninformation mit einer Brillenposenangabe und einem Zeitstempel, der einem Zeitpunkt des Erfassens der durch die Brillenposenangabe angegebenen absoluten Pose der Datenbrille in Bezug zu einem Fahrzeugkoordinatensystem entspricht; Empfangen einer Fahrzeugbewegungsinformation mit einer Fahrzeugbewegungsangabe und einem Zeitstempel, der einem Zeitpunkt des Erfassens der durch die Fahrzeugbewegungsangabe angegebenen relativen Bewegung des Kraftfahrzeugs bezüglich der Fahrzeugumgebung entspricht; Ermitteln einer aktuellen Brillenposenangabe in der Datenbrille abhängig von der Brillenposeninformation, der Fahrzeugbewegungsinformation und der Brillenbewegungsinformation; und Betreiben des Anzeigesystems abhängig von der aktuellen Brillenposenangabe.

Die Druckschrift DE 10 2019 103 360 A1 offenbart ein Verfahren zum Betreiben eines Anzeigesystems mit einem Assistenzsystem und einer Datenbrille, insbesondere in einem Kraftfahrzeug, mit folgenden Schritten: Bereitstellen einer Brillenposenangabe, die eine Brillenpose mindestens einer Anzeigefläche der Datenbrille angibt; Bereitstellen einer Augenposenangabe, die eine Augenpose mindestens eines Auges des Trägers der Datenbrille angibt; Ermitteln einer Kalibrierinformation, die einen relativen Versatz der mindestens einen Anzeigefläche der Datenbrille zu dem mindestens einem Auge des Trägers der Datenbrille angibt; und Verwenden der Kalibrierinformation zum Anzeigen eines virtuellen Objekts auf der mindestens einen Anzeigefläche der Datenbrille.

Es ist Aufgabe der vorliegenden Erfindung, ein Verfahren zum Bestimmen der Einbaulage einer im Fahrzeug fest installierten Inertialsensorik zur Verfügung zu stellen, die es ermöglicht, auch im Rahmen eines Trackingverfahrens für ein im Fahrzeug bewegliches Endgerät, wie beispielsweise eine Datenbrille, verwendet zu werden.

Offenbarung der Erfindung

Diese Aufgabe wird durch das Verfahren zum Ermitteln einer Einbaupose eines fahrzeugfest angebrachten Inertialsensors in einem Fahrzeug zur Verwendung in einem Anzeigesystem mit einem mobilen Endgerät, insbesondere einer Datenbrille, gemäß Anspruch 1 sowie ein Anzeigesystem gemäß den nebengeordneten Ansprüchen gelöst.

Weitere Ausgestaltungen sind in den abhängigen Ansprüchen angegeben.

Gemäß einem ersten Aspekt ist ein Verfahren zum Ermitteln einer Einbaupose einer Fahrzeug-Inertialsensorik in einem Fahrzeug mit einer im Fahrzeug bewegbaren Datenbrille vorgesehen, mit folgenden Schritten:

- Ermitteln einer Brillenpose der Datenbrille mithilfe eines fahrzeugfesten Trackingsystems, um zu verschiedenen Zeitpunkten jeweils eine absolute Brillenpose in einem Fahrzeugkoordinatensystem zu erhalten;
- Erfassen einer Beschleunigungsangabe des Fahrzeugs durch die Fahrzeug-Inertialsensorik;
- Erfassen einer Brillen-Beschleunigungsangabe durch eine Brillen-Inertialsensorik in der Datenbrille;
- Ermitteln der Einbaupose der Fahrzeug-Inertialsensorik abhängig von den absoluten Brillenposen, der Beschleunigungsangabe der Datenbrille und der Beschleunigungsangabe des Fahrzeugs.

Insbesondere kann die Einbaupose der Fahrzeug-Inertialsensorik verwendet werden, um eine Kalibration der Einbaupose der Fahrzeug-Inertialsensorik vorzusehen, und/oder ein Tracking der Datenbrille oder eine Lokalisation des Fahrzeugs zu verbessern.

Weiterhin kann die Beschleunigungsangabe der Datenbrille und/oder die Beschleunigungsangabe des Fahrzeugs jeweils eine bis drei translatorische Beschleunigungen und/oder eine bis drei rotatorische Beschleunigungen bezüglich mindestens einer Raumrichtung umfassen.

Das obige Verfahren geht aus von einem Anzeigesystem mit einer Datenbrille in einem Fahrzeug, bei dem das Tracking durch ein fahrzeugfest eingebautes Trackingsystem unterstützt wird. Das Trackingsystem kann z.B. eine auf den Fahrer gerichtete Innenraumkamera nebst Kamerabildauswertung oder eine sonstige Lokalisierungseinrichtung vorsehen. Das Trackingsystem hat eine genau bekannte Einbaupose, die beispielsweise aus CAD-Daten ermittelt werden kann oder im Rahmen der Fertigung eingemessen oder justiert werden kann. Das Trackingsystem mit der Innenraumkamera kann durch Erfassen des Fahrers, der die Datenbrille trägt, oder der Datenbrille direkt eine Brillenpose in an sich bekannter Weise ermitteln. Die Brillenpose liegt aufgrund der bekannten Einbaupose der Innenraumkamera bezüglich des Fahrzeugkoordinatensystems vor. Das Fahrzeugkoordinatensystem orientiert sich fest an dem Fahrzeugaufbau und weist damit einen damit fest definierten und vorgegebenen Bezug zur Einbaupose des Trackingsystems bzw. der Innenraumkamera auf.

Die Datenbrille ist mit einer Brillen-Inertialsensorik versehen, um ein eigenes Tracking der Datenbrille bezüglich des Fahrzeugkoordinatensystems vorzusehen. Die Brillen-Inertialsensorik erfasst translatorische und/oder rotatorische Beschleunigungsdaten bezüglich einer oder mehrerer Raumrichtungen. Durch eine in der Datenbrille vorgenommene Auswertung kann das Tracking der Datenbrille mit einer sehr hohen Frequenz erfolgen. Jedoch wird aufgrund der relativen Messung der Brillen-Inertialsensorik eine Posenänderung durch zweimalige Integration von Beschleunigungswerten ermittelt, was zu einem zunehmenden Fehler führt. Die Posenänderung wird bezüglich eines bestimmten Zeitpunkts ermittelt, zu dem eine Kenntnis einer absoluten Brillenpose basierend auf der Auswertung des fahrzeuginternen Trackingsystems vorliegt. Aus der Posenänderung und der absoluten Brillenpose kann die aktuelle Brillenpose bestimmt werden.

Im Fahrzeug kann weiterhin eine fest angeordnete Fahrzeug-Inertialsensorik vorgesehen sein, um eine weitere Korrekturmöglichkeit für das Brillentracking bereitzustellen. Beispielsweise kann ein Tracking der Datenbrille auch durch Abgleich der Beschleunigungsdaten der Datenbrille mit denen des Fahrzeugs vorgenommen werden. Die Fahrzeug-Inertialsensorik kann darüber hinaus auch für die Verbesserung einer Lokalisierung des Fahrzeugs genutzt werden.

Somit kann eine Brillenpose der Datenbrille sowohl mithilfe des fahrzeugfesten Trackingsystems als auch mithilfe des Fahrzeug-Inertialsensors bestimmt werden. Eine wesentliche Voraussetzung hierfür ist jedoch, dass die Innenraumkamera und die Fahrzeug-Inertialsensorik einen festen Bezug zum Fahrzeugkoordinatensystem aufweisen. Während dies für die Innenraumkamera aufgrund der Einbausituation in einfacher und bekannter Weise realisierbar ist, sind Fahrzeug-Inertialsensoriken häufig in Elektronikmodulen vorgesehen, die nicht stabil und robust mit einem festen Bezug zum Fahrzeugkoordinatensystem im Fahrzeug angeordnet werden können.

Das obige Verfahren sieht nun vor, basierend auf der mithilfe des Trackingsystems ermittelten absoluten Brillenpose den Beschleunigungsdaten der Brillen-Inertialsensorik und den Beschleunigungsdaten aus der Fahrzeug-Inertialsensorik die korrekte tatsächliche Einbaupose der Fahrzeug-Inertialsensorik zu ermitteln. Insbesondere wird eine Abweichung der Ausrichtung der Fahrzeug-Inertialsensorik von einer zum Fahrzeugkoordinatensystem definierten Referenz-Einbaupose bestimmt und als Kalibrierungsinformation bereitgestellt. Diese Kalibrierungsinformation stellt Offsets der Einbauposition und der Einbauorientierung dar.

Die Ermittlung erfolgt durch Auswertung der Differenz zwischen zwei zeitlich nacheinander durch das Trackingsystem erfassten absoluten Brillenposen und einer zweifachen zeitlichen Integration der für diesen Zeitraum erfassten Beschleunigungsdaten der Datenbrille und des Fahrzeugs, insbesondere bei einer relativen Bewegung der Datenbrille zum Fahrzeugkoordinatensystem während des Erfassungszeitraums.

Weiterhin kann die Einbaupose der Fahrzeug-Inertialsensorik abhängig von einer Minimierung einer Fehlerfunktion einer Beschleunigungsbilanz aus der Posenänderung der absoluten Brillenposen, der durch die Brillen-Inertialsensorik erfassten Beschleunigungsangabe und der durch die Fahrzeug-Inertialsensorik erfassten Beschleunigungsangaben bestimmt werden.

Gemäß einem weiteren Aspekt ist ein Anzeigesystem zum Ermitteln einer Einbaupose einer Fahrzeug-Inertialsensorik in einem Fahrzeug mit einer im Fahrzeug bewegbaren Datenbrille vorgesehen, wobei das Anzeigesystem ausgebildet ist, zum:

- Ermitteln einer Brillenpose der Datenbrille mithilfe eines fahrzeugfesten Trackingsystems, um zu verschiedenen Zeitpunkten jeweils eine absolute Brillenpose in einem Fahrzeugkoordinatensystem zu erhalten;
- Erfassen einer Beschleunigungsangabe des Fahrzeugs durch die Fahrzeug-Inertialsensorik;
- Erfassen einer Brillen-Beschleunigungsangabe durch eine Brillen-Inertialsensorik in der Datenbrille;
- Ermitteln der Einbaupose der Fahrzeug-Inertialsensorik abhängig von den absoluten Brillenposen, der Beschleunigungsangabe der Datenbrille und der Beschleunigungsangabe des Fahrzeugs.

Kurzbeschreibung der Zeichnung

Ausführungsformen werden nachfolgend anhand der beigefügten Zeichnungen näher erläutert. Es zeigen:

Figur 1     eine schematische Darstellung eines Anzeigesystems mit einer Datenbrille zum Einsatz in einem Kraftfahrzeug; und

Figur 2     ein Flussdiagramm zur Veranschaulichung eines Verfahrens zum Bestimmen einer Einbaupose einer Fahrzeug-Inertialsensorik.

Beschreibung von Ausführungsformen

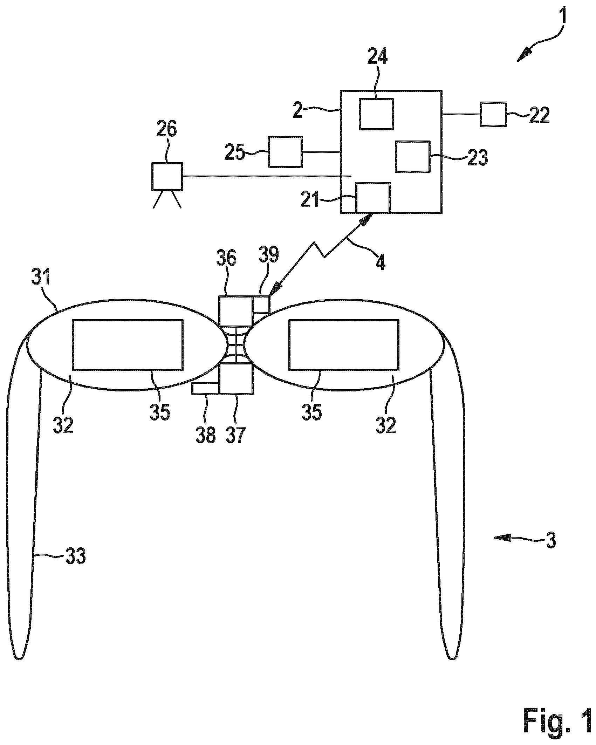

Figur 1 zeigt eine schematische Darstellung eines Anzeigesystems 1 insbesondere zum Einsatz in einem Kraftfahrzeug als technisches System. Das Anzeigesystem 1 umfasst ein ortsfestes Assistenzsystem 2, das in Kommunikationsverbindung 4 mit einer Datenbrille 3 steht. Die Kommunikationsverbindung 4 ist als ein Datenübertragungskanal ausgebildet, z.B. in Form einer drahtlosen Kommunikationsverbindung oder einer drahtgebundenen Kommunikationsverbindung. Die Kommunikationsverbindung 4 ist in der Lage, jegliche Art von Daten und Informationen zwischen dem Assistenzsystem 2 und der Datenbrille 3 zu übermitteln, beispielsweise basierend auf einer paketgebundenen Datenübertragung. Die Kommunikationsverbindung 4 kann beispielsweise auf WiFi, Bluetooth, Bluetooth Low Energy oder einem vergleichbaren standardisierten Funkprotokoll basieren.

Die Datenbrille 3 umfasst zwei transparente Sichtscheiben 32, die in einem Rahmen 31 in an sich bekannter Weise eingefasst sind. Der Rahmen 31 ist mit Brillenbügeln 33 versehen, so dass die Datenbrille 3 am Kopf eines Benutzers in an sich bekannter Weise getragen werden kann.

Eine oder beide Sichtscheiben 32 (Brillengläser) sind weiterhin mit einer transparenten Anzeigefläche 35 versehen, durch die durch eine geeignete Einrichtung, wie zum Beispiel eine an dem Rahmen 31 angeordnete Anzeigeeinrichtung 36, ein Anzeigebild zur Darstellung von virtuellen Informationsobjekten ins Auge des Trägers der Datenbrille 3 projiziert werden kann. Die Anzeigeeinrichtung 36 kann einen Mikroprozessor oder eine vergleichbare Recheneinheit und eine Anzeigeeinheit, wie z.B. eine Projektionseinrichtung oder dergleichen, aufweisen. Die Anzeigeeinheit kann ausgebildet sein, das elektronisch generierte Anzeigebild auf die Anzeigefläche 35 zu richten und dort abzubilden/-darzustellen.

Durch die transparente Ausbildung der Anzeigefläche 35 kann das elektronisch generierte Bild die durch die Anzeigefläche 35 wahrnehmbare Realumgebung überlagern. Mithilfe der Anzeigeeinrichtung 36 kann ein virtuelles Informationsobjekt, wie beispielsweise einen Text, ein Symbol, eine Videoinformation, eine Graphik oder dergleichen, auf einer oder beiden Anzeigeflächen 35 dargestellt werden.

Die Datenbrille 3 kann wie eine typische Sehhilfe an dem Kopf des Benutzers getragen werden, wobei die Datenbrille 3 mit dem Rahmen 31 auf der Nase des Benutzers aufliegt und die Bügel 33 an dem Kopf des Benutzers seitlich anliegen. Die Blickrichtung des Benutzers in Geradeausrichtung erfolgt dann durch die transparenten Anzeigeflächen 35 der Sichtscheiben 32, so dass die Blickrichtung des Benutzers, die durch eine Augenposition und eine optische Blickachse (Augenachse) vorgegeben ist, einen festen Bezug zur Ausrichtung der Datenbrille 3 aufweist. Dieser Bezug hängt individuell von dem Träger der Datenbrille 3 ab und wird durch eine Kalibrierungsinformation angegeben.

Zur Anzeige von Informationsobjekten werden entsprechende Objektinformationen in Form von Objektdaten von dem Assistenzsystem 2 an die Datenbrille 3 übermittelt. Die Objektdaten geben dabei die Art des Informationsobjekts, wie z.B. ein Textobjekt, ein Icon oder eine sonstige Kennzeichnung eines Anzeigebereichs, den Blickwinkelbereich bzw. die Blickwinkelbereiche, in dem/denen das Informationsobjekt auf der Anzeigefläche angezeigt werden soll und die Objektposition auf der Anzeigefläche, an der das Informationsobjekt angezeigt werden soll.

Zur Erkennung der Brillenpose der Datenbrille 3 kann eine Brillen-Inertialsensorik 38 vorgesehen sein, der zum Beispiel in Form eines 6-DoF-Inertialsensors ausgebildet ist. Dieser weist in der Regel drei Gyroskope und drei Beschleunigungssensoren für alle Raumrichtungen auf. Dieser stellt eine BrillenBewegungsangabe in Form von einer bis drei translatorischen und/oder einer bis drei rotatorischen Beschleunigungsangaben zur Verfügung. Die Brillen-Bewegungsangabe bezieht sich zunächst auf ein Brillenkoordinatensystem, das durch die Einbaupose der Brillen-Inertialsensorik 38 vorgegeben ist.

Mithilfe einer Steuereinheit 37 werden Objektinformationen über eine Kommunikationseinrichtung 39 von dem Assistenzsystem 2 empfangen und verarbeitet, so dass diese in dem jeweiligen Blickwinkelbereich, in den der Benutzer der Datenbrille 3 blickt, angezeigt werden. Ferner nutzt die Steuereinheit 37 die Brillen-Bewegungsangaben, um eine aktuelle Pose der Datenbrille 3 durch Integration der Bewegungsangaben zu ermitteln.

Das Assistenzsystem 2 kann Teil eines Fahrzeugassistenzsystems sein und insbesondere ortsfest in dem Kraftfahrzeug vorgesehen sein. Das Assistenzsystem 2 kann mit einer Kommunikationseinheit 21 ausgestattet sein, die die Kommunikationsverbindung 4 zwischen Datenbrille 3 und dem Assistenzsystem 2 ermöglicht.

Das Assistenzsystem 2 kann weiterhin mit einer Fahrzeug-Inertialsensorik 24 versehen sein, der fest in das Fahrzeug eingebaut ist oder ortsfest in dem Fahrzeuginnenraum montiert ist, wie z.B. ein Smartphone in einer entsprechenden Haltung. Die Fahrzeug-Inertialsensorik 24 erfasst translatorische Beschleunigungen des Fahrzeugs in translatorischen Raumrichtungen sowie rotatorische Beschleunigungen in rotatorischen Raumrichtungen bezüglich des Fahrzeugkoordinatensystems.

Das Assistenzsystem 2 kann weiterhin mit einem Umgebungserfassungssystem 25, das eine oder mehrere Kameras aufweist, verbunden sein. Das Umgebungserfassungssystem 25 kann die Umgebung des Kraftfahrzeugs erfassen. Die eine oder die mehreren Kameras können z. B. eine RGB-, IR-, Fisheye-Kamera, einen Dynamic Vision Sensor und dergleichen umfassen.

Das Assistenzsystem 2 kann eine Prozessoreinheit 23 aufweisen, durch die abhängig von einer geografischen Position des Kraftfahrzeugs und abhängig von einer durch das Umgebungserfassungssystem 25 erfassten Umgebungsabbild in an sich bekannter Weise mindestens ein virtuelles Informationsobjekt zur Anzeige in der Datenbrille 3 generiert und/oder bestimmt werden. Die Position des mindestens einen virtuellen Informationsobjekts wird bezüglich eines fahrzeugfesten Koordinatensystems angegeben. Die Position des virtuellen Informationsobjekts kann einem Blickwinkelsegment zugeordnet werden. Zur Darstellung in der Datenbrille 3 wird eine Objektinformation generiert, die entsprechend Blickwinkelsegment, Objektinhalt und Objektart der Darstellung des mindestens einen virtuellen Informationsobjekts in der Datenbrille 3 angibt.

Das Blickwinkelsegment umfasst einen Winkelbereich in Kopfdrehrichtung (um die Vertikalachse) und in Kopfkipprichtung (um die Querachse des Kraftfahrzeugs), in dem dem Benutzer, d.h. dem Träger der Datenbrille 3, brillenfeste Informationsobjekte, d.h. an einer festgelegten Position auf einer Anzeigefläche der Datenbrille 3 angezeigt werden sollen

Es kann ein Innenraumkamerasystem als bilderfassende Einrichtung eines Trackingsystems 26 vorgesehen sein, das z.B. mit einer oder mehreren Innenraumkameras ausgestattet sein kann, um die kamerabasierte Brillenpose der Datenbrille 3 zu erfassen. Dazu sind die eine oder die mehreren Innenraumkameras auf den Träger der Datenbrille 3 ausgerichtet. Ferner sind die Einbaupositionen und Orientierungen der einen oder der mehreren Innenraumkameras im Fahrzeug genau bekannt. Die Prozessoreinheit 23 ist ausgebildet, die Aufzeichnungen des Innenraumkamerasystems zu erfassen und durch an sich bekannte Verfahren die kamerabasierte Brillenpose aus den Aufzeichnungen zu ermitteln. Die Information über die kamerabasierte Brillenpose der Datenbrille 3 steht damit in dem Assistenzsystem 2 zur Verfügung. Die kamerabasierte Brillenpose wird durch das Innenraumkamerasystem mit Bezug auf das Fahrzeugkoordinatensystem als Referenzkoordinatensystem, das fest dem Fahrzeug zugeordnet ist, bestimmt.

Ferner weist das Assistenzsystem 2 eine fahrzeugfeste Fahrzeug-Inertialsensorik 24 auf, um eine Bewegungsangabe des Fahrzeugs bezüglich seiner Bewegung in der Umgebung zu erfassen. Die Bewegungsangabe umfasst translatorische und/oder rotatorische Beschleunigungsangaben jeweils in/bezüglich bis zu drei Raumrichtungen. Die Einbauposition und Orientierung der fahrzeugfesten Fahrzeug-Inertialsensorik 24 ist gemäß einer Referenz-Einbaupose vorgegeben.

Die Einbauposition und Orientierung der fahrzeugfesten Fahrzeug-Inertialsensorik ist in der Regel zwar bekannt, jedoch können aufgrund von Fertigungstoleranzen translatorische oder rotatorische Abweichungen der Einbaupose von der Referenz-Einbaupose auftreten.

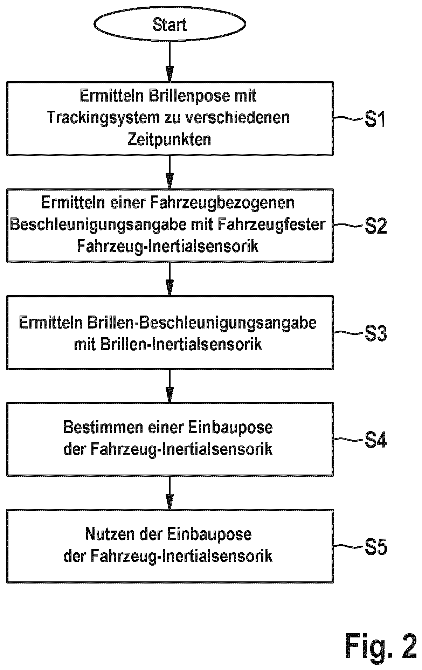

Anhand des Flussdiagramms der Figur 2 wird das Verfahren zum Ermitteln der Einbaupose der Fahrzeug-Inertialsensorik 24 näher beschrieben.

In Schritt S1 werden Brillenpose anhand des Trackingsystems 26 als bildgebende Einrichtung bestimmt. Dazu erfasst die Innenraumkamera des Trackingsystems 26 den Fahrer des Fahrzeugs, der die Datenbrille 3 trägt, und ermittelt durch Auswertung der resultierenden Kamerabilder die absoluten Brillenposen der Datenbrille 3 bezüglich des Fahrzeugkoordinatensystems jeweils zu einem bestimmten Zeitpunkt. Die Auswertung erfolgt durch an sich bekannte Bildauswertungsverfahren. Die Bestimmung der Brillenpose kann z.B. durch ein featurebasiertes Verfahren erfolgen, indem markante Punkte im Bild getrackt werden und daraus die Brillenpose ermittelt wird. Außerdem kann auch ein lernender Algorithmus in Form eines entsprechend trainierten neuronalen Netzes zur Erkennung der Brillenpose verwendet werden.

In Schritt S2 werden mithilfe des fahrzeugfesten Fahrzeug-Inertialsensors 24 im Fahrzeug Beschleunigungsangaben erfasst, d.h. 6DoF-Beschleunigungsdaten bezüglich aller Raumrichtungen. Dazu werden die Beschleunigungsangaben mit hoher Erfassungsfrequenz aufgezeichnet und zwischengespeichert.

In Schritt S3 werden mithilfe der Brillen-Inertialsensorik 38 Beschleunigungsangaben der Datenbrille 3, d.h. 6DoF-Beschleunigungsdaten bezüglich aller Raumrichtungen, ermittelt.

In Schritt S4 werden die erfassten Informationen, d.h. die durch das Trackingsystem erfassten absoluten Brillenposen, die in der Datenbrille 3 und dem Fahrzeug erfassten Beschleunigungsangaben der Datenbrille 3 und des Fahrzeugs, zusammengeführt, entweder in dem Assistenzsystem 2 oder in der Datenbrille 3, so dass zeitsynchronisiert die Beschleunigungsangaben der Fahrzeug-Inertialsensorik 24, die Beschleunigungsangaben der Brillen-Inertialsensorik 38 und die von dem Trackingsystem 26 ermittelten absoluten Brillenpose bereitgestellt werden.

Bei einer Bewegung der Datenbrille 3 können nun die entsprechenden Beschleunigungsangaben und die absoluten Brillenposen erfasst werden. Durch Abgleich der erfassten Daten wird gegebenenfalls ein Fehler festgestellt, der zur Korrektur der Einbaupose der Fahrzeug-Inertialsensorik 24 verwendet werden kann. So kann beispielsweise eine Bewegung der Datenbrille 3 bezüglich des Fahrzeugkoordinatensystems durch eine Differenzbildung der Beschleunigungsangaben $a_{brille}$ der Brillen-Inertialsensorik 38 und der Beschleunigungsangaben $a_{fahrzeug}$ der Fahrzeug-Inertialsensorik 24 gebildet werden, die mit der über das Trackingsystem 26 ermittelten aufeinanderfolgend zu verschiedenen Zeitpunkten ermittelten absoluten Brillenposen $P_{brille}$ abgeglichen werden kann.

Beispielsweise bezieht sich eine Einbaupose des Trackingsystems 26 auf das Fahrzeugkoordinatensystem, so dass die absoluten Brillenposen P bezüglich des Fahrzeugkoordinatensystem bestimmt werden.

Der Abgleich des Trackingsystems 26 mit den Messgrößen der Brillen-Inertialsensorik 38 und Fahrzeug-Inertialsensorik 24 findet durch die Minimierung einer Fehlerfunktion statt. Der Fehler $fehler_{position}$ für die Position ergibt sich durch einen Vergleich der Brillenbeschleunigungsangaben aus dem Trackingsystem 26: wird ermittelt durch die doppelte zeitliche Ableitung der Pose P (Position und Orientierung separat) mit den gemessenen Beschleunigungswerten der Inertialsensoriken und $a_{brille}$ und $a_{fahrzeug}$. Analog gilt dasselbe für die Orientierung mit den Winkelgeschwindigkeiten. Durch die Bewegung des Fahrzeugs ergeben sich für die Formulierung des Positionsfehlers weitere Beschleunigungsgrößen $term_{acc,tangential}$, $term_{acc,coriolis}$ und $term_{acc,centripetal}$. Diese beinhalten, unter anderem, die Verbauposition der

$$fehler_{position} = {}^{IMU,b}_{IMF,f}R \cdot a_{brille} - a_{fahrzeug} - \frac{d^2}{dt^2}(P(t2) - P(t1))$$

Fahrzeug-Inertialsensorik.

$term_{acc,tangential} - term_{acc,coriolis} - term_{acc,centripetal}$
wobei aus der Pose P nur die Position berücksichtigt wird und

$$fehler_{orientierung} = \frac{d^2}{dt^2}(P(t2) - P(t1)) - \left(\omega_{brille} - {}^{IMU,f}_{IMF,b}R \cdot \omega_{fahrzeug}\right)$$

wobei aus der Pose P nur die Orientierung berücksichtigt wird.

Die Tangentialbeschleunigung $term_{acc,tangential}$ ergibt sich durch die Multiplikation der Fahrzeugdrehbeschleunigung $\dot{\omega}_{fahrzeug}$ mit der Brillenposition im Fahrzeug. Die Coriolisbeschleunigung $term_{acc,coriolis}$ berechnet sich mit $2 \cdot \omega_{fahrzeug} \cdot v_{brille}$, wobei $v_{brille}$ die Geschwindgkeit der Brille im Fahrzeug beschreibt (Ermittlung durch einfach zeitliche Ableitung der Brillenposition). Die Zentripetalbeschleunigung $term_{acc,centripetal}$ berechnet sich mit $\omega_{fahrzeug} \cdot \omega_{fahrzeug} \cdot p$ wobei p die Position der Datenbrille im Fahrzeug ist. Der Term ${}^{IMU,b}_{IMF,f}R$ beschreibt die Rotation von der Brillen-Inertialsensorik 38 zur Fahrzeug-Inertialsensorik 24.

Der Gesamtfehler ergibt sich aus der Summe von Orientierungsfehler und Positionsfehler:

$$fehler_{gesamt} = \left|fehler_{position}\right| + \left|fehler_{orientierung}\right|$$

Durch einen Abgleich bzw. Minimierung des Gesamtfehlers lässt sich die Einbaupose der Fahrzeug-Inertialsensorik 24 ermitteln. Die zu verändernde Größe der Fehlerfunktion ist die Verbauposition der Fahrzeug-Inertialsensorik 24.

$$\min_{pose,imu,fahrzeug} fehler_{gesamt}$$

In Schritt S5 wird die ermittelte Einbaupose der Fahrzeug-Inertialsensorik 24 genutzt, um das Tracking der Datenbrille 3 und/oder die Lokalisierung des Fahrzeugs zu verbessern.

**Bezugszeichenliste**

| | |
|---|---|
| 1 | Anzeigesystem |
| 2 | Assistenzsystem |
| 3 | Datenbrille |
| 4 | Kommunikationsverbindung |
| 21 | Kommunikationseinheit |
| 23 | Prozessoreinheit |
| 24 | Fahrzeug-Inertialsensorik |
| 25 | Umgebungserfassungssystem |
| 26 | Trackingsystem |
| 31 | Rahmen |
| 32 | Sichtscheiben |
| 33 | Brillenbügel |
| 35 | Anzeigefläche |
| 36 | Anzeigeeinrichtung |
| 37 | Steuereinheit |
| 38 | Brillen-Inertialsensorik |
| 39 | Kommunikationseinrichtung |

**Patentansprüche**

1. Verfahren zum Ermitteln einer Einbaupose einer Fahrzeug-Inertialsensorik (38) in einem Fahrzeug mit einer im Fahrzeug bewegbaren Datenbrille (3), mit folgenden Schritten:

   - Ermitteln (S1) einer Brillenpose der Datenbrille (3) mithilfe eines fahrzeugfesten Trackingsystems, um zu verschiedenen Zeitpunkten jeweils eine absolute Brillenpose (P) in einem Fahrzeugkoordinatensystem zu erhalten;
   - Brillenexternes (S2) Erfassen einer Beschleunigungsangabe des Fahrzeugs durch die Fahrzeug-Inertialsensorik;
   - Erfassen (S3) einer Brillen-Beschleunigungsangabe durch eine Brillen-Inertialsensorik (38) in der Datenbrille (3); und, das Verfahren ist durch den weiteren Schritt gekennzeichnet:

     - Ermitteln (S4) der Einbaupose der Fahrzeug-Inertialsensorik (38) abhängig von den absoluten Brillenposen (P), der Beschleunigungsangabe der Datenbrille (3) und der Beschleunigungsangabe des Fahrzeugs.

2. Verfahren nach Anspruch 1, wobei die Einbaupose der Fahrzeug-Inertialsensorik (38) verwendet wird, um eine Kalibration der Einbaupose der Fahrzeug-Inertialsensorik (38) vorzusehen, und/oder um ein Tracking der Datenbrille (3) oder eine Lokalisation des Fahrzeugs zu verbessern.

3. Verfahren nach Anspruch 1 oder 2, wobei die Beschleunigungsangabe der Datenbrille (3) und/oder die Beschleunigungsangabe des Fahrzeugs jeweils eine bis drei translatorische Beschleunigungen und/oder eine bis drei rotatorische Beschleunigungen bezüglich mindestens einer Raumrichtung umfassen.

4. Verfahren nach einem der Ansprüche 1 bis 3, wobei die Einbaupose der Fahrzeug-Inertialsensorik (38) abhängig von einer Minimierung einer Fehlerfunktion einer Beschleunigungsbilanz aus der Posenänderung der absoluten Brillenposen (P), der durch die Brillen-Inertialsensorik erfassten Beschleunigungsangabe und der durch die Fahrzeug-Inertialsensorik erfassten Beschleunigungsangaben bestimmt wird.

5. Verfahren nach Anspruch 4, wobei die Fehlerfunktion einen Positionsfehler ($fehler_{position}$) und einen Orientierungsfehler ($fehler_{orientierung}$) der Fahrzeug-Inertialsensorik (38) berücksichtigt, wobei der Positionsfehler der Fahrzeug-Inertialsensorik (38) abhängig von einer Tangentialbeschleunigung ($term_{acc,coriolis}$) einer Coriolisbeschleunigung ($term_{acc,coriolis}$) und einer Zentripetalbeschleunigung ($term_{acc,centripetal}$) bestimmt wird.

6. Anzeigesystem zum Ermitteln einer Einbaupose einer Fahrzeug-Inertialsensorik (38) in einem Fahrzeug mit einer im Fahrzeug bewegbaren Datenbrille (3), wobei das Anzeigesystem ausgebildet ist, zum:

   - Ermitteln einer Brillenpose der Datenbrille (3) mithilfe eines fahrzeugfesten Trackingsystems, um zu verschiedenen Zeitpunkten jeweils eine absolute Brillenpose (P) in einem Fahrzeugkoordinatensystem zu erhalten;
   - Brillenexternes Erfassen einer Beschleunigungsangabe des Fahrzeugs durch die Fahrzeug-Inertialsensorik;
   - Erfassen einer Brillen-Beschleunigungsangabe durch eine Brillen-Inertialsensorik (38) in der Datenbrille (3);
   - Ermitteln der Einbaupose der Fahrzeug-Inertialsensorik (38) abhängig von den absoluten Brillenposen (P), der Beschleunigungsangabe der Datenbrille (3) und der Beschleunigungsangabe des Fahrzeugs.

**Claims**

1. Method for determining an installation pose of a vehicle inertial sensor system (38) in a vehicle using smartglasses (3) that are movable in the vehicle, comprising the following steps:

   - determining (S1) a glasses pose of the smartglasses (3) using a vehicle-fixed tracking system in order to obtain an absolute glasses pose (P) in a vehicle coordinate system at various times;
   - detecting (S2) acceleration information of the vehicle externally to the glasses by way of the vehicle inertial sensor system;
   - detecting (S3) glasses acceleration information by way of a glasses inertial sensor system (38) in the smartglasses (3); and

the method is **characterized by** the further step of:

- determining (S4) the installation pose of the vehicle inertial sensor system (38) on the basis of the absolute glasses poses (P), the acceleration information of the smartglasses (3) and the acceleration information of the vehicle.

2. Method according to Claim 1, wherein the installation pose of the vehicle inertial sensor system (38) is used to provide for calibration of the installation pose of the vehicle inertial sensor system (38) and/or to improve tracking of the smartglasses (3) or location of the vehicle.

3. Method according to Claim 1 or 2, wherein the acceleration information of the smartglasses (3) and/or the acceleration information of the vehicle each comprise one to three translational accelerations and/or one to three rotational accelerations with respect to at least one spatial direction.

4. Method according to one of Claims 1 to 3, wherein the installation pose of the vehicle inertial sensor system (38) is identified on the basis of minimization of an error function of an acceleration balance from the change of pose of the absolute glasses poses (P), the acceleration information recorded by the glasses inertial sensor system and the acceleration information recorded by the vehicle inertial sensor system.

5. Method according to Claim 4, wherein the error function takes account of a position error ($error_{position}$) and an orientation error ($error_{orientation}$) of the vehicle inertial sensor system (38), the position error of the vehicle inertial sensor system (38) being identified on the basis of a tangential acceleration ($term_{acc,coriolis}$), a Coriolis acceleration ($term_{acc,coriolis}$) and a centripetal acceleration ($term_{acc,centripetal}$).

6. Display system for determining an installation pose of a vehicle inertial sensor system (38) in a vehicle using smartglasses (3) that are movable in the vehicle, the display system being designed to:

- determine a glasses pose of the smartglasses (3) using a vehicle-fixed tracking system in order to obtain an absolute glasses pose (P) in a vehicle coordinate system at various times;
- detect acceleration information of the vehicle externally to the glasses by way of the vehicle inertial sensor system;
- detect glasses acceleration information by way of a glasses inertial sensor system (38) in the smartglasses (3);
- determine the installation pose of the vehicle inertial sensor system (38) on the basis of the absolute glasses poses (P), the acceleration information of the smartglasses (3) and the acceleration information of the vehicle.

## Revendications

1. Procédé pour déterminer une position de montage d'un système (38) de capteurs inertiels de véhicule dans un véhicule, comprenant des lunettes connectées (3) mobiles dans le véhicule, comprenant les étapes suivantes :

- déterminer (S1) une position des lunettes connectées (3) à l'aide d'un système de suivi fixe dans le véhicule afin d'obtenir à différents moments une position absolue (P) des lunettes dans un système de coordonnées du véhicule ;
- détecter (S2) à l'extérieur des lunettes une valeur d'accélération du véhicule au moyen du système de capteurs inertiels du véhicule ;
- détecter (S3) une valeur d'accélération des lunettes au moyen d'un système (38) de capteurs inertiels de lunettes intégré aux lunettes connectées (3) ; et

le procédé est **caractérisé par** l'étape supplémentaire suivante :

- déterminer (S4) la position de montage du système (38) de capteurs inertiels de véhicule en fonction des positions absolues (P) des lunettes, de la valeur d'accélération des lunettes connectées (3) et de la valeur d'accélération du véhicule.

2. Procédé selon la revendication 1, dans lequel la position de montage du système (38) de capteurs inertiels de véhicule est utilisée pour prévoir un étalonnage de la position de montage du système (38) de capteurs inertiels de véhicule et/ou pour améliorer le suivi des lunettes connectées (3) ou la localisation du véhicule.

3. Procédé selon la revendication 1 ou la revendication 2, dans lequel la valeur d'accélération des lunettes connectées (3) et/ou les valeurs d'accélération du véhicule comprennent chacune une à trois accélérations en translation et/ou une à trois accélérations en rotation par rapport à au moins une direction spatiale.

4. Procédé selon l'une des revendications 1 à 3, dans lequel la position de montage du système (38) de capteurs inertiels de véhicule dépend d'une minimisation d'une fonction d'erreur d'un bilan d'accélération résultant de la modification de la position absolue des lunettes (P), de la valeur d'accélération enregistrée par le capteur inertiel de lunettes et des valeurs d'accélération enregistrées par le système de capteurs inertiels de véhicule.

5. Procédé selon la revendication 4, dans lequel la fonction d'erreur tient compte d'une erreur de position ($fehler_{position}$) et d'une erreur d'orientation ($fehler_{orientierung}$) du système (38) de capteurs inertiels de véhicule, l'erreur de position du système (38) de capteurs inertiels de véhicule étant déterminée en fonction d'une accélération tangentielle ($term_{acc,coriolis}$) d'une accélération de Coriolis ($term_{acc,coriolis}$) et d'une accélération centripète ($term_{acc,centripetal}$).

6. Système d'affichage pour déterminer une position de montage d'un système (38) de capteurs inertiels de véhicule dans un véhicule au moyen de lunettes connectées (3) mobiles dans le véhicule, le système d'affichage étant conçu pour :

- déterminer une position de lunettes des lunettes connectées (3) à l'aide d'un système de suivi fixe dans le véhicule afin d'obtenir à différents moments une position absolue (P) des lunettes dans un système de coordonnées du véhicule ;
- détecter à l'extérieur des lunettes une valeur d'accélération du véhicule au moyen du système de capteurs inertiels du véhicule ;
- détecter une valeur d'accélération des lunettes au moyen d'un système (38) de capteurs inertiels de lunettes intégré aux lunettes connectées (3) ;
- déterminer la position de montage du système (38) de capteurs inertiels de véhicule en fonction des positions absolues (P) des lunettes, de la valeur d'accélération des lunettes connectées (3) et de la valeur d'accélération du véhicule.

EP 4 422 905 B1

Fig. 1

11

Start

Ermitteln Brillenpose mit
Trackingsystem zu verschiedenen
Zeitpunkten — S1

Ermitteln einer Fahrzeugbezogenen
Beschleunigungsangabe mit Fahrzeugfester
Fahrzeug-Inertialsensorik — S2

Ermitteln Brillen-Beschleunigungsangabe
mit Brillen-Inertialsensorik — S3

Bestimmen einer Einbaupose
der Fahrzeug-Inertialsensorik — S4

Nutzen der Einbaupose
der Fahrzeug-Inertialsensorik — S5

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018201509 A1
- DE 102019103360 A1